# EUROPEAN PATENT SPECIFICATION

(11) **EP 0 663 284 B1**
(45) Date of publication and mention of the grant of the patent: **02.05.2001**
(21) Application number: 95200094.1
(22) Date of filing: 16.01.1995
(51) Int. Cl.: B32B 17/06, G02B 5/28, C03C 27/12

(54) **Method for coating transparent materials by means of interferential deposits**
Verfahren zum Beschichten von transparenten Materialen durch interferometrische Absetzungen
Procédé pour revêtir des matériaux transparents an moyen de dépots interferométriques

(30) Priority: 17.01.1994 IT MI940048
(43) Date of publication of application: 19.07.1995
(73) Proprietor: Zanoni, Adelfio, I-20018 Sedriano (Milano) (IT)
(72) Inventor: Zanoni, Adelfio, I-20018 Sedriano (Milano) (IT)
(74) Representative: De Gregori, Antonella

(56) References cited:
- FR-A- 2 653 704
- PATENT ABSTRACTS OF JAPAN vol. 009 no. 232 (P-389) ,18 September 1985 & JP-A-60 086506 (NIPPON DENKI KK) 16 May 1985,
- PATENT ABSTRACTS OF JAPAN vol. 018 no. 162 (P-1712) ,17 March 1994 & JP-A-05 333208 (SANO FUJI KOKI KK) 17 December 1993,
- PATENT ABSTRACTS OF JAPAN vol. 017 no. 275 (M-1418) ,27 May 1993 & JP-A-05 008349 (NIPPON SHEET GLASS CO LTD;OTHERS: 01) 19 January 1993,
- PATENT ABSTRACTS OF JAPAN vol. 016 no. 532 (P-1448) ,30 October 1992 & JP-A-04 199102 (RICOH CO LTD) 20 July 1992,
- PATENT ABSTRACTS OF JAPAN vol. 014 no. 258 (P-1055) ,4 June 1990 & JP-A-02 068518 (CANON INC) 8 March 1990,
- PATENT ABSTRACTS OF JAPAN vol. 009 no. 299 (P-408) ,27 November 1985 & JP-A-60 134202 (DAINIPPON INSATSU KK) 17 July 1985,

## Description

The present invention relates to a method for coating transparent materials by means of interferential deposits.

FR-A-2 653 704 relates to a laminated sheet with a coloured pattern comprising at least two layers of rigid, transparent material, such as glass, joined together by at least one intermediate bonding layer and containing particles of a solid, coloured material. The laminated sheet is thermally treated in an autoclave under pressure.

Applying layers of interferential material to elements of transparent material, is known.

The preferably used transparent material is glass; it is charged to a vacuum chamber, or to a controlled atmosphere chamber, inside which the powders of interferential material are vapourized by heating. The powders of said interferential material are deposited onto the glass and adhere to it, forming a layer of interferential material which modifies the optical and chromatic characteristics of glass. The resulting optical-chromatic modification mainly is a function of the chemical composition of said interferential powders.

The sectors of use of so treated transparent materials are many. For example, glasses and crystals are submitted to such a treatment in order to be used in optics, as well as in the field of ornamental articles.

Unfortunately, not always the attrition resistance of the layer of interferential material is high enough in order to meet the necessary required standard for some applications, including aesthetical ones. Therefore, the actual usage of such a technology is more limited than the potentially achievable usage if the drawbacks deriving from the limited attrition resistance of the interferential layer were overcome.

The purpose of the present invention is of obviating the drawbacks deriving from such a limitation, i.e., suggesting a method for coating transparent materials which are a glass or crystal sheet by means of interferential deposits, which method results in said layer of interferential material getting firmly associated with the transparent material element it is destined to, so that the so obtained products result to be particularly resistant to attrition.

Such purposes are achieved by a method according to claim 1.

Therefore, as the layer of interferential material is applied onto a non-external surface of the article of manufacture, the layer of interferential material results to be protected to a large enough extent from wearing down phenomena due to attrition or chemical attack, even when these are particularly intense.

The present invention is disclosed and illustrated for merely exemplifying, non-limitative purposes with the aid of the accompanying drawing table, in which:
Figure 1 is a schematic, partial and sectional view of an article of manufacture produced according to a first embodiment of the present invention;
Figure 2 is a corresponding view to the preceding Figure 1, of an article of manufacture produced according to a second embodiment of the present invention;
Figure 3 is a corresponding view to the preceding Figures, of an article of manufacture produced according to a third embodiment of the present invention;

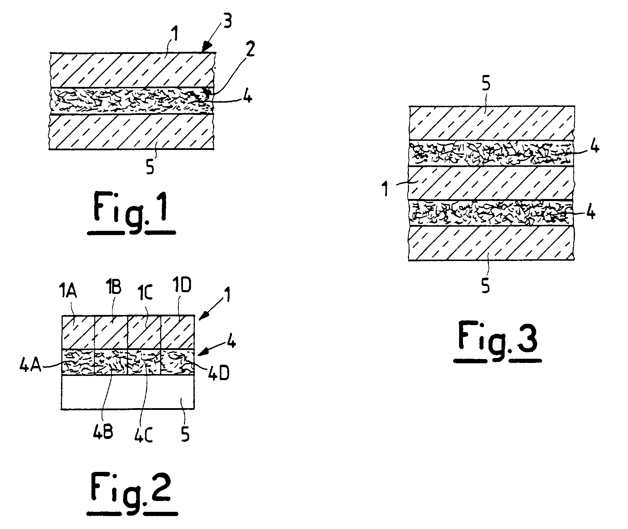

The article of manufacture, made of glass or crystal according to Figure 1, is obtained by means of a process for treating transparent materials by means of interferential deposits according to the present invention.

A first glass or crystal sheet (1) is charged to an interferential material deposition apparatus (which, per se, is a traditional one and therefore is not illustrated herein). Said first sheet (1) is submitted to a treatment which implies the deposition on at least one of both main faces (2) and (3), of a layer (4) of an interferential material constituted, e.g., by at least one component, e.g., metal salts or metal oxides. When the first step of interferential material deposition is over, the first sheet (1) is superimposed to a second glass or crystal sheet (5) Cor, vice-versa, the second sheet (5) is superimposed to the first sheet (1)], in such a way that said second layer of interferential material (4) remains sandwiched between both said sheets (1) and (5). The mutual constraint of both sheets is obtained during a subsequent, to wit, a second step during which both glass or crystal sheets (1) and (5) are caused to adhere to each other by means of the combined action of heat and pressure. Under such conditions, the glass, or the crystal, from which both said sheets are formed, softens, with said sheets getting bonded to each other owing to the mutual interpenetration of the surface layers of the sheets.

Therefore, the layer (4) of interferential material remains sheltered between two material elements, preferably in sheet form, from mechanical attrition and attacks of chemical character.

For example, the use is now possible or such noxious substances as interferential layers, in order to decorate containers for alimentary substances which, as known, have surface exposed both to mechanical attrition caused by cutlery and chemical attack by food.

According to a particular embodiment, illustrated in Figure 2, the process according to the present invention can provide for the first step to be repeated on a plurality of first sheets (1A)-(1D) of transparent material, with to each of said first sheets at least one layer (4A)-(4D) of interferential material being applied, with each of said layers (4A)-(4D) yielding a chromatic effect different from the chromatic effect yielded by the other layers (4A)-(4D) of interferential material applied to the residual first sheets.

Said first sheets (1A)-(1D) of transparent material are then constrained to said second element of transparent material Cwhich, in the case exemplified herein, is a glass sheet (5)], preferably according to an orderly preestablished pattern, so as to generate a desired graphic pattern, and/or a chromatic effect, so that said layers of interferential materials remain also sandwiched between said first (1) and said second (5) glass or crystal sheets.

The great advantage offered by such a particular embodiment of the present process is the one which derives from the noteworthy rationalization of the same process. In fact, the interferential deposition can be limited to the only surface of transparent material which must actually be treated with a determined interferential substance, with the use being avoided of masks to obtain depositions of a plurality of layers with different colours.

The subsequent placing the portion (1A)-(1D) of treated sheet (1) to rest on the backing sheet (5) makes it possible to decorate backing sheets (5) with large main surfaces, with no need for installing purposely oversized facilities to receive enormously large-sized sheets (1). Extremely good results from the technical viewpoint can be attained the easier, the smaller the surfaces to be coated. In fact, the smaller the surface to be coated with the layer of interferential material, the more easily a uniform, high-quality layer can be obtained at lower costs thanks to the resulting lower energy consumption, and value of the facility -- which may possibly also be of an obsolete type.

Summing-up, the process according to the present invention can be applied to elements of transparent material made from glass or crystal. The transparency is obviously necessary in order to allow the passage to occur of the light on which one wishes to exert an influence by means of the deposition; however, said transparency in no way is a nonrenounciable condition for the deposition of the layer of interferential material to take place.

The process according to the present invention furthermore contemplates that the glass or crystal sheet may bear a layer of interferential material on both main surfaces. That should be the case, each layer of interferential material will be sandwiched between respective second transparent sheets of glass or crystal The mutual adhesion between said transparent glass or crystal sheets is obtained by means of the combined action of heat and pressure, alone, with no glues being used, exactly in the same way, as in the case already taken into consideration hereinabove.

The obtained article of manufacture is illustrated in Figure 3.

## Claims

1. A method for treating transparent materials by means of interferential deposits, comprising a first step of deposition under vacuum of at least one layer of interferential material on at least one surface of a first element of transparent material which is a glass or crystal sheet and a subsequent second step in which said first element of transparent material is constrained to at least one second element of transparent material which is a glass or crystal sheet, acting as backing element, so that at least one layer of interferential material remains sandwiched between said first element of transparent material and said at least one second element of transparent material, said method being characterized in that
said first and said second element of transparent material are constrained to each other by causing them to soften and therefore to adhere by means of the combined action of heating and pressure, with said sheets getting bonded to each other owing to the mutual interpenetration of the surface layers of the sheets, without any glue layer interposed between said elements.

2. Method according to claim 1, characterised in that
- the first step is repeated on a plurality of first elements of transparent material, with at least one layer of interferential materials being applied to each first element of transparent material, with each of said at least one layers of interferential materials yielding a chromatic effect which is different from a chromatic effect yielded by the residual at least one layers of interferential materials applied to the residual first elements of transparent material;
- said first elements of transparent material are constrained onto said second element of transparent material, in an ordered position, so as to form a graphic pattern and/or to yield a chromatic effect, in such a way that said layers of interferential materials remain sandwiched between said first and said second elements of transparent material.

3. Method according to anyone of claims 1 and 2 characterised in that the first and second elements of transparent material are glass sheets.

## Patentansprüche

1. Verfahren zur Behandlung von transparenten Materialien durch Störmaterialablagerungen, welches als erste Stufe die Ablagerung mindestens einer Schicht eines Störmaterials auf mindestens eine Oberfläche eines ersten Elements aus tranparentem Material, das eine Glas- oder Kristallplatte ist, unter Vakuum und eine nachfolgende zweite Stufe umfaßt, in der das erste Element aus transparentem Material auf mindestens ein zweites Element aus transparentem Material, das eine Glas- oder Kristallplatte ist und als Träger wirkt, aufgetragen wird, so daß mindestens eine Schicht des Störmaterials sandwichartig zwischen dem ersten Element aus transparentem Material und dem mindestens einen zweiten Element aus transparentem Material verbleibt, wobei das Verfahren dadurch gekennzeichnet ist, daß das erste und das zweite Element aus transparentem Material dadurch aneinander gebunden werden, daß sie erweicht werden und deshalb durch die vereinte Wirkung von Erhitzen und Druck aneinanderhaften, wobei die Platten aufgrund des gegenseitigen Ineinanderdringens der Oberflächenschichten der Platten aneinander gebunden werden, ohne daß eine zwischen den transparenten Materialien aufgebrachte Kleberschicht vorhanden ist.

2. Verfahren nach Anspruch 1, dadurch gekennzeichnet, daß die erste Stufe für mehrere erste Elemente aus transparentem Material wiederholt wird, wobei mindestens eine Schicht der Störmaterialien auf das jeweilige erste Element aus transparentem Material aufgetragen wird, wobei jede der mindestens einen Schicht aus Störmaterialien eine chromatische Wirkung hat, die sich von der chromatischen Wirkung unterscheidet, die sich aus der verbleibenden mindestens einen Schicht der Störmaterialien ergibt, die auf die verbleibenden ersten Elemente aus transparentem Material aufgetragen wird,
die ersten Elemente aus transparentem Material auf das zweite Element aus transparentem Material an bestimmten Stellen, so daß ein graphisches Muster gebildet wird und/oder eine chromatische Wirkung erzielt wird, in einer Weise aufgetragen werden, daß die Schichten der Störmaterialien sandwichartig zwischen den ersten und den zweiten Elementen aus transparentem Material verbleiben.

3. Verfahren nach Anspruch 1 und 2, dadurch gekennzeichnet, daß die ersten und zweiten Elemente aus transparentem Material Glasplatten sind.

## Revendications

1. Procédé pour le traitement de matériaux transparents au moyen de dépôts interférentiels, comprenant une première étape de déposition sous vide d'au moins une couche de matériau interférentiel sur au moins une surface d'un premier élément de matériau transparent qui est une feuille de verre ou de cristal et une seconde étape consécutive dans laquelle le premier élément de matériau transparent est contraint sur au moins un second élément qui est une feuille de verre ou de cristal, faisant office d'élément de support, de sorte qu'au moins une couche de matériau interférentiel demeure intercalée entre ledit premier élément de matériau transparent et au moins ledit second élément de matériau transparent , ledit procédé étant caractérisé en ce que
ledit premier et ledit second élément de matériau transparent sont contraints l'un contre l'autre ce qui a pour effet de les ramollir et par conséquent d'adhérer au moyen de l'action combinée de l'échauffement et de la pression, lesdites feuilles venant se souder entre elles par suite de l'interpénétration réciproque des couches de surface des feuilles, sans qu'aucune couche de colle ne soit intercalée entre lesdits éléments.

2. Procédé selon la revendication 1, caractérisé en ce que
- la première étape est répétée sur une pluralité de premiers éléments de matériau transparent, avec au moins une couche de matériaux interférentiels appliquée sur chaque premier élément de matériau transparent , avec au moins chacune des couches de matériaux interférentiels conférant un effet chromatique qui est différent de l'effet chromatique conféré par au moins l'une des couches résiduelles de matériaux interférentiels appliquée sur les premiers éléments résiduels du matériau transparent;
- lesdits premiers éléments du matériau transparent sont contraints sur ledit second élément du matériau transparent, dans une position ordonnée, de façon à former un dessin graphique et/ou de conférer un effet chromatique, de telle sorte que ces couches de matériaux interférentiels demeurent intercalées entre lesdits premier et second éléments de matériau transparent.

3. Procédé selon l'une des revendications 1 et 2, caractérisé en ce que les premier et second éléments de matériau transparent sont des feuilles de verre.
